# EUROPÄISCHE PATENTSCHRIFT

(11) **EP 0 650 552 B1**
(45) Veröffentlichungstag und Bekanntmachung des Hinweises auf die Patenterteilung: **17.04.1996**
(21) Anmeldenummer: 93914708.8
(22) Anmeldetag: 23.06.1993
(51) Int. Cl.: F01N 3/28, B01J 35/04

(54) **METALLISCHER WABENKÖRPER AUS VERSCHLUNGENEN BLECHLAGEN UND VERFAHREN ZU SEINER HERSTELLUNG**
METAL HONEYCOMB BODY OF ENTWINED LAYERS OF SHEET METAL AND PROCESS FOR PRODUCING IT
CORPS METALLIQUE EN NID D'ABEILLES COMPOSE DE COUCHES DE TOLE ENTRELACEES ET SON PROCEDE DE FABRICATION

(30) Priorität: 14.07.1992 DE 4223134; 14.07.1992 DE 4223096
(43) Veröffentlichungstag der Anmeldung: 03.05.1995
(73) Patentinhaber: Emitec Gesellschaft für Emissionstechnologie mbH, D-53797 Lohmar (DE)
(72) Erfinder: Maus, Wolfgang, D-5060 Bergisch Gladbach 1 (DE); Swars, Helmut, D-5060 Bergisch Gladbach 1 (DE); Brück, Rolf, D-5060 Bergisch Gladbach 1 (DE); Humpolik, Buhomil, D-7140 Ludwigsburg (DE)
(74) Vertreter: Kahlhöfer, Hermann Bardehle-Pagenberg-Dost-Altenburg-Frohwitter-Geissler & Partner Patent- und Rechtsanwälte
(86) Internationale Anmeldenummer: EP9301608
(87) Internationale Veröffentlichungsnummer: WO9401661

(56) Entgegenhaltungen:
- EP-A- 0 218 062
- EP-A- 0 222 355
- DE-A- 2 321 378
- DE-A- 3 341 868
- DE-A- 3 928 750

## Beschreibung

Metallischer Wabenkörper aus verschlungenen Blechlagen und Verfahren zu seiner Herstellung

Die vorliegende Erfindung betrifft einen Wabenkörper, insbesondere einen Katalysator-Trägerkörper, welcher aus zumindest teilweise strukturierten Blechen aufgebaut ist und viele für ein Fluid durchlässige Kanäle aufweist.

Aus der DE-OS 23 21 378 ist bekannt, Wabenkörper aus einem Blechband herzustellen, indem das Blechband mit Faltlinien versehen, gefaltet und in eine zylindrische Hülse eingeschoben wird. Das Band ist dabei um ein Zentrum herum angeordnet, wobei sowohl die zum Zentrum des Bandes als auch die nach außen weisenden äußeren Umfangssegmente Kreise bilden. Das Blechband selbst bleibt ungewellt, so daß im Wabenkörper insgesamt nur wenige Durchströmungskanäle großen Querschnitts ausgebildet sind. Im Inneren des Metallträgers verbleibt ein zylindrischer Hohlraum, der nicht für den katalytischen Umwandlungsprozeß genutzt werden kann.

Aus der EP-OS 245 737 ist bekannt, Wabenkörper aus einer Vielzahl einzelner Blechlagen herzustellen. Hierbei werden abwechselnd gewellte und glatte Blechabschnitte zu einem Stapel aufgeschichtet und dieser Stapel anschließend um zwei Fixpunkte verschlungen, so daß sich ein Wabenkörper ergibt, dessen Blechlagen etwa in Form eines S angeordnet sind.

Aus der DE-OS 33 41 868 ist bekannt, einen Wabenkörper aus mäander- bzw. zick-zack-förmig aufeinandergefaltetem Blechband herzustellen. Dabei ist das Band an den Faltstellen mit vorgefertigten Knicklinien versehen.

Der bekannte Stand der Technik weist zahlreiche Nachteile auf. So ist in der DE-OS 23 21 378 die katalytisch aktive Fläche zu klein, insbesondere für einen Einsatz im Kfz ist eine erheblich größere Katalysatoroberfläche bei gleichzeitig sehr kompakten äußeren Abmaßen erwünscht. In der EP-OS 245 737 wird der Wabenkörper aus einzelnen Blechabschnitten gefertigt. Die Handhbung dieser Abschnitte ist aber problematisch, da die Bleche sehr dünn und mit einer sehr glatten Oberfläche versehen sind, so daß sie leicht aufeinander haften. In der Fertigung muß hierauf besonders Rücksicht genommen werden. In der DE-OS 33 41 868 werden diese Nachteile zwar vermieden, dafür ist der Wabenkörper aber sehr steif, so daß er thermischen Belastungen mitunter nicht standhält. Außerdem ist die Art des Aufeinanderfaltens der zick-zack-förmigen Lagen sehr aufwendig.

Aus der EP-A-0 245 736 ist ein Wabenkörper bekannt, bei welchem die einzelnen Blechlagen im Außenbereich evolventenförmig verlaufen, was zu einem sehr gleichmäßigen Aufbau und einer großen Haltbarkeit bei thermischen Belastungen führt. Aus der WO 90/03220, von der die vorliegende Erfindung ausgeht, ist weiter ein besonders günstiges Verfahren zur Herstellung solcher Wabenkörper bekannt, bei welchem drei oder mehr Stapel von zumindest teilweise strukturierten Blechen miteinander verschlungen werden.

Die Bauformen haben viele Vorteile, insbesondere weil bei thermischen Wechselbelastungen die Kräfte gleichmäßig im Wabenkörper verteilt auftreten, jedoch ist als Nachteil zu nennen, daß eine Vielzahl von Blechen auf eine geeignete Länge geschnitten und zu Stapeln geschichtet werden muß. Auch sind die einzelnen Blechlagen nicht so lang, daß sich elektrische Leiter von genügender Lange zum Beheizen des Wabenkörpers oder zum repräsentativen Messen über den gesamten Querschnitt in einem einzigen solchen Blech integrieren ließen.

Aus der WO 91/14855 ist zwar ferner ein Wabenkörper mit mindestens einem integrierten elektrischen Leiter bekannt, jedoch kann dieser bei einfachem Verlauf nur eine begrenzte Länge bieten.

Es ist somit eine Aufgabe der vorliegenden Erfindung, einen Wabenkörper mit einer großen katalytisch einsetzbaren Fläche bereitzustellen, der mit wenigen Herstellungsschritten aus einer geringen Zahl von Blechen herstellbar und thermischen Wechselbelastungen standhält.

Aufgabe der vorliegenden Erfindung ist ferner die Schaffung eines Wabenkörpers, insbesondere Katalysator-Trägerkörpers für die Abgasreinigung von Kraftfahrzeugverbrennungsmotoren, welcher aus nur einer geringen Anzahl von Blechen besteht, gleichmäßig aufgebaut ist und dessen Aufbau sich auch dazu eignet, zumindest einen langen elektrischen Leiter in zumindest eine der Blechlagen zu integrieren oder eine der Blechlagen selbst als langen isolierten elektrischen Leiter auszubilden.

Zur Lösung dieser Aufgabe dient ein metallischer Wabenkörper mit umeinandergeschlungenen, zumindest teilweise strukturierten Blechlagen, die gekrümmt, insbesondere etwa evolventenförmig zwischen einen äußeren Ringbereich in einem Mantelbereich und einem inneren Ringbereich in einem Zentrumsbereich abwechselnd hin- und herverlaufen und Schlaufen bilden, wobei der Körper in dem äußeren Ringbereich in der Nähe seines Mantels und in dem inneren Ringbereich in der Nähe seines Zentrums je mindestens 3 Umkehrlinien aufweist, um welche die Blechlagen verschlungen sind.

Wie anhand der Zeichnung noch näher erläutert wird, läßt sich ein solcher Wabenkörper aus einem Hohlwickel durch sternförmiges Falten und anschließendes Umeinanderschlingen der "Sternzacken" leicht herstellen. Der Hohlwickel besteht aus spiralig umeinandergewickelten strukturierten Blechen, welche einen Hohlzylinder bilden, dessen Außenradius R und dessen Innenradius r ist. Die Querschnittsfläche des Hohlzylinders ist nämlich π (R -r), entspricht in etwa der Querschnittsfläche des aus dem Hohlwickel später herzustellenden Wabenkörpers. Im einfachsten Falle besteht der Hohlwickel aus einer eingängigen Spirale aus einem glatten und einem gewellten Blech, jedoch besteht auch die Möglichkeit, eine mehrgängige Spirale z.B. aus abwechselnden glatten und gewellten Blechen herzustellen. Auch abwechselnde Lagen aus unterschiedlich strukturierten Blechen, z. B. in einem Winkel schräg gewellten Blechen, wie aus dem Stand der Technik in vielen Ausführungsformen bekannt, sind möglich. Der Hohlwickel läßt sich beispielsweise durch Aufwickeln der Blechlagen auf einen zylindrischen Kern leicht herstellen.

Der Hohlwickel wird anschließend jedoch nicht, wie aus dem Stand der Technik bekannt, z. B. EP 332 891 B1, flachgedrückt und dann verschlungen, sondern an mindestens drei Stellen von außen nach innen eingedrückt, so daß sich eine Sternform bildet. Die "Zacken" des Stern können gleichsinnig um das Zentrum des Sterns geschlungen werden, so daß sich ein dicht mit strukturierten Blechlagen gefüllter gewünschter Querschnitt bildet. Dabei verlaufen die einzelnen Blechlagen etwa evolventenförmig, nur sind die Blechlagen, anders als beim Stand der Technik, in sich geschlossen, so daß außen keine freien Enden auftreten, sondern nur gebogene Blechrücken außen liegen.

Die Zahl der Umkehrlinien, die für beide Krümmungsrichtungen jeweils gleich ist, soll bevorzugt innen und außen je mindestens vier betragen. Bei bestimmten Anwendungen, insbesondere wenn ein Wabenkörper hergestellt werden soll, der einen hohlen inneren Ringbereich aufweist, ist sogar eine noch größere Zahl wünschenswert. Die Differenz von äußerem und innerem Radius (R-r) des Hohlwickels und die Zahl der Umkehrlinien, sowie deren anfängliche Verteilung über den Umfang des Hohlwickels, bestimmen die spätere Form des Querschnittes bzw. die Größe eines hohlen inneren Ringbereiches.

Grundsätzlich kann der Hohlwickel auf vielfältige Weise aufgebaut werden, wobei bevorzugt ein bis fünf Blechstreifen verwendet werden, die zumindest teilweise eine wellenartige Struktur aufweisen. Teilweise bedeutet, daß entweder ein Blechstreifen in Teilbereichen diese Struktur aufweist, oder aber ein Teil der Blechstreifen diese Struktur aufweist. Es ist beispielsweise möglich, einen Hohlwickel aus einem einzigen Blechstreifen herzustellen, welcher z. B. auf seiner halben Länge glatt und auf der anderen Hälfte gewellt und dann zusammengefaltet ist. Auch der Aufbau aus einem glatten und einem gewellten Blechstreifen oder aber aus mehreren solchen Blechstreifen ist möglich, wobei alle aus dem Stand der Technik bekannten Strukturen und Substrukturen der Bleche Anwendung finden können. Insgesamt hat der Hohlwickel bevorzugt drei bis sieben Lagen, die durch Aufwickeln der ein bis fünf Blechstreifen entstehen.

Ganz besonders eignet sich die vorliegende Erfindung für Wabenkörper, in denen mindestens ein elektrisch von dem Wabenkörper isolierter elektrischer Leiter integriert sein soll, der als Heizleiter und/oder als Meßfühler ausgebildet ist. Zur Herstellung eines repräsentativ über den Querschnitt des Wabenkörpers messenden Temperaturfühlers ist es wichtig, einen relativ langen Leiter unterbringen zu können. Das gleiche gilt auch für einen Heizdraht bei elektrisch beheizbaren Wabenkörpern. Hier bietet die vorliegende Erfindung gegenüber Wabenkörpern, die aus einer Vielzahl einzelner Bleche bestehen, den Vorteil, daß problemlos ein langer Leiter, z.B. ein Draht, in eine der Blechlagen integriert werden kann, vorzugsweise in eine gewellte Blechlage. Wie bekannt ist, kann so ein elektrischer Leiter beispielsweise in einem Mantelleiter angeordnet und z.B. zwischen zwei Blechlagen eingewalzt werden. Jede andere Art der Integration eines elektrischen Leiters in eine Blechlage ist ebenfalls möglich, so z. B. das Einlegen in eine geschlitzte gewellte Blechlage. Die Durchführung des elektrischen Leiters durch ein Fenster in ein evtl. den Wabenkörper umgebendes Mantelrohr kann entsprechend der nicht vorveröffentlichten deutschen Patentanmeldung P 41 29 893.4 vom 9. September 1991, auf die hier vollinhaltlich Bezug genommen wird, gelöst werden. Im allgemeinen ist ein erfindungsgemäßer Wabenkörper von einem Mantelrohr umgeben, wobei die äußerste Blechlage dieses Mantelrohr entlang von Berührungslinien in der Nähe der äußeren Umkehrlinien berührt. Zur Befestigung des Wabenkörpers im Mantelrohr kann die äußerste Blechlage zumindest in Teilbereichen ihrer Berührungslinien mit dem Mantel durch Hartlöten mit diesem verbunden werden.

Auch untereinander werden die Blechlagen bevorzugt, zumindest in Teilbereichen durch Hartlöten verbunden, vorzugsweise im Bereich einer oder beider Stirnseiten.

Die Erfindung lehrt auch ein Verfahren zur Herstellung eines metallischen Wabenkörpers aus zumindest teilweise strukturierten Blechlagen mit folgenden Schritten:
a) aus ein bis zehn, vorzugsweise drei bis fünf, Blechstreifen, die zumindest teilweise eine Struktur aufweisen, wird ein Hohlwickel aus einer Mehrzahl, vorzugsweise drei bis zehn, Lagen hergestellt;
b) der Hohlwickel wird an mindestens drei Linien von innen gestützt und an mindestens drei Linien von außen nach innen verformt, so daß sich entsprechend viele Umkehrlinien sowohl in einem äußeren Ringbereich wie auch in einem inneren Ringbereich bilden;
c) die entstehende sternähnlich Struktur wird durch gleichsinniges drehendes Verschlingen der äußeren Umkehrlinien gegenüber den inneren Umkehrlinien kompaktiert.

Wie anhand der Zeichnung näher erläutert wird, handelt es sich um ein sehr schnelles und einfaches Herstellungsverfahren, welches nur wenige Einzelschritte aufweist. Trotzdem können durch geeignete Wahl der Dimensionen des Hohlwickels und der Zahl der Umkehrlinien, welche außerdem nicht gleichmäßig über den Umfang des Hohlwickels verteilt sein müssen, sehr vielfältige Formen hergestellt werden, analog zu dem im Stand der Technik bereits bekannten Formenschatz. Dabei können die Umkehrlinien, wie in der Zeichnung erläutert wird, auch auf mehreren konzentrischen Kreisen oder unregelmäßig verteilt im fertigen Wabenkörper liegen, um Sonderformen zu erzielen.

So kann der Hohlwickel beispielsweise an mindestens vier Linien von außen nach innen verformt werden, wobei zur Bildung nicht kreisrunder Querschnitte die Umkehrlinien in Umfangsrichtung unterschiedliche Abstände voneinander haben.

Völlig problemlos läßt sich in diesen Herstellungsprozeß mindestens ein Blechstreifen integrieren, der aus zwei eng aneinanderliegenden Blechlagen gebildet ist, zwischen denen mindestens ein elektrischer Leiter elektrisch isoliert integriert ist. Ohne daß sich das Herstellungsverfahren überhaupt ändert, läßt sich auf diese Weise ein sehr langer elektrischer Leiter gleichmäßig verteilt über den Querschnitt des Wabenkörpers anordnen, der als Meßfühler oder auch als Heizleiter dienen kann.

Wie auch schon in dem Stand der Technik, von dem die Erfindung ausgeht, ist einer der wesentlichen Vorteile der vorliegenden Erfindung, daß auf einfache Weise ein Wabenkörper mit einem hohlen inneren Zentralbereich gebildet werden kann, der sogar hier nicht unbedingt durch ein Zentralrohr gestützt sein muß.

Der Wabenkörper ist vorzugsweise aus einem gewellten, dünnen Metallband - die Materialstärke beträgt etwa 0,02 mm bis 0,1 mm - hergestellt. Das Wellband verläuft abwechselnd von einem Zentrum zu einem Mantel und von dort wieder zurück zu dem Zentrum. Jede Lage des Wellbandes kommt dabei auf der benachbarten Lage des Bandes zu liegen, dabei ergibt sich für den Metallträger eine spiralförmige oder evolventenförmige Struktur mit einer Vielzahl axial verlaufender Kanäle. Die radial nach innen weisenden Schlaufen des Metallbandes liegen mit ihren Scheitelpunkten innerhalb des Zentrums, das sie nahezu vollständig ausfüllen können. Die Anordnung der Schlaufen im Zentrum muß nicht symmetrisch sein. Die radial nach außen weisenden Schlaufen sind um die radial inneren Schlaufen und somit um das Zentrum herumgeschlungen, wodurch sich die bereits beschriebene Spiralform ergibt. Die äußeren Bereiche der Schlaufen sind mit einem umgebenden Mantelgehäuse fügetechnisch oder formschlüssig verbunden.

Wegen des schlaufenförmigen Aufeinanderlegens des Wellbandes muß dafür Sorge getragen werden, daß die Wellungen zweier aufeinanderliegender Wellbandlagen sich nicht ineinanderschieben können, sondern daß durchströmbare Kanäle mit einem definierten Querschnitt erhalten bleiben. Dies kann durch besondere Wellenform im Wellband, beispielsweise nach der DE-OS 33 47 086 erreicht werden. Die Wellung kann aber auch schräg zum Bandverlauf eingeprägt werden. Als besonders vorteilhaft hat sich hierbei eine Abweichung der Wellung von der Senkrechten zur Kante des Wellbandes um 2° bis 10° erwiesen. Bei einem schlaufenbzw. zick-zack-förmigen Aufeinanderfalten des Wellbandes kreuzen sich somit die Wellungen des Bandes, wodurch ein Ineinandergleiten der Wellbänder verhindert wird.

Eine weitere Möglichkeit, das Ineinanderfallen von zwei Wellbändern zu vermeiden, ist das Einfügen von trennenden Glattbändern. Vorzugsweise ist das Wellband zwischen zwei Glattbändern angeordnet. Bei einem schlaufen- bzw. zick-zack-förmigen Aufeinanderlegen der so angeordneten Glatt- und Wellbänder kommt das jeweils innen liegende Glattband auf sich selbst zu liegen, so daß das Wellband immer auf dieser doppelten Glattbandschicht abgestützt wird, wobei das Glattband entsprechend dünn gewählt werden kann, z.B. etwa 0,02 mm.

In einer weiteren bevorzugten Ausgestaltung werden mehrere gewellte und glatte Bänder in den Wabenkörper eingebracht. Hierbei ist jedes Wellband zwischen zwei Glattbändern angeordnet, so daß sich immer ein Glattband und ein Wellband abwechseln. Als äußere Lage ist jeweils ein Glattband vorzusehen, da sonst bei einer schlaufen- oder zick-zack-förmigen Anordnung zwei Seiten eines Wellbandes aufeinander zu liegen kämen. Durch diese Anordnung mit mehrfach übereinanderliegenden Glatt- und Wellbändern ist es möglich, auch größere Wabenkörperquerschnitte auszufüllen, ohne die Anzahl der Schlaufen oder die Zahl der Umschlingungen um das Zentrum über Gebühr erhöhen zu müssen.

Eine weitere Möglichkeit, die schlaufenförmig angeordneten Wellbänder zu trennen, ist das Einschieben einzelner Glattbandabschnitte zwischen die Wellbandlagen. Hierbei werden die Blechabschnitte sowohl vom Zentrum als auch vom Rand her zwischen die Wellbandlagen eingefügt, so daß die Glattbandabschnitte etwa sternförmig angeordnet sind. Die nach außen weisenden Glattbandabschnite werden mit den radial äußeren Schlaufen um das Zentrum herumgeschlungen und mit dem Mantel fügetechnisch oder formschlüssig verbunden.

Um das Ineinandergleiten zweier Lagen Wellband zu verhindern, kann z.B. eine Lage Glattbannd zwischengefügt werden. Hierzu werden ein Glattband und ein Wellband aufeinander gelegt. In den Scheitelpunkten der Schlaufen werden gleichzeitig beide Bänder von beiden Kanten her eingeschnitten bzw. ausgestanzt, so daß in der Mitte des Bandes lediglich ein schmaler Steg stehen bleibt. Die Glatt- und Wellbandabschnitte zwischen zwei Stegen werden zu dem vorhergehenden Bandabschnitt um 180° um die Längsachse verdreht. Bei einem nachfolgenden schlaufenbzw. zick-zack-förmigen Zusammenlegen der Bänder kommen nun jeweils eine Lage Glattband und eine lage Wellband aufeinander zu liegen.

Bei dem Verfahren zur Herstellung des erfindungsgemäßen Wabenkörpers wird mindestens ein gewelltes Metallband zu einem ein- oder mehrlagigen Hohlwickel aufgewickelt. Hierbei wird das Wellband über Wickeldorne gelegt, die gleichmäßig auf einem Kreis mit dem Innendurchmesser D1 angeordnet sind. Die Anzahl der Wickellagen ergibt sich aus der gewünschten Dicke der anschließend erzeugten Schlaufen, die wiederum vom geforderten Durchmesser des Wabenkörpers abhängt. Die Anzahl der Wickeldorne wird in der Regel so gewählt, daß sie der Anzahl der Schlaufen entspricht, die zur Herstellung des Metallträgers erforderlich sind, damit das Wellband nach einem Verschlingen der Schlaufen um das Zentrum den Kreisinhalt des Wabenkörpers genau ausfüllt.

Im zweiten Verarbeitungsschritt wird das Wellband zwischen den Wickeldornen zum Zentrum des Wabenkörpers eingezogen. Hierzu werden Einziehdorne von außen an den Kreisring aus Wellband herangeführt und das Wellband von diesen Einziehdornen zum Zentrum mitgezogen, wobei die Wickeldorne federnd nachgeben, damit das Wellband nicht überdehnt wird. Nach dem Einziehen ist das vorher kreisförmig angeordnete Wellband zu einer Rosettenform umgeformt wobei die Wickeldorne nunmehr auf einem verkleinerten, kreisförmigen Durchmesser D2 angeordnet sind.

Im nächsten Fertigungsschritt werden die Wickeldorne entfernt. Die radial äußeren Schlaufen werden um die radial inneren Schlaufen herumgeschlungen. Dabei werden die Wellbänder an die jeweils benachbarten Wellbandlagen angedrückt, so daß sich für den Wabenkörper eine spiralförmige Struktur mit dem Außendurchmesser D3 ergibt. Während des Verschlingens dienen die Einziehdorne als Halterungen für die Schlaufen, so daß diese in dem Zentrum festgelegt sind. Zuletzt wird der so erzeugte Wabenkörper in einen Mantel eingesetzt und mit diesem fügetechnisch oder formschlüssig verbunden.

Dieses Herstellungsverfahren kann dahingehend abgewandelt werden, daß während des Aufwickelns des Wellbandes auf die Wickeldorne zusätzlich zwei Glattbänder zugeführt werden, so daß das Wellband zwischen den beiden Glattbändern verläuft. Dies ist immer dann erforderlich, wenn die Prägung des Wellbandes ein Ineinanderrutschen zweier aufeinanderliegender Wellbandlagen nicht verhindert, beispielsweise bei einer einfachen, sinusförmigen Wellung.

Durch die Anforderungen des modernen Automobilbaus kommen häufig Wabenkörper zum Einsatz, die von der kreisrunden Form abweichen. Die häufig eingesetzten ellipsen- oder stadionförmigen Metallträger werden dadurch hergestellt, daß das Zentrum der Metallträger nicht punkt- oder kreisförmig gestaltet, sondern daß es annähernd eine Linienform einnimmt. So sind ellipsenförmige Metallträger dadurch herstellbar, daß die radial inneren Schlaufen zu einer Geraden gezogen werden, die etwa die beiden Brennpunkte der Ellipse verbindet. Weitere Formen von Wabenkörpern sind so leicht herzustellen, wobei für andere geometrische Ausführungen das Zentrum jeweils angepaßt, beispielsweise kurvenförmig gestaltet wird.

Wabenkörper mit besonderen geometrischen Formen lassen sich auf diese Weise allerdings nicht herstellen, beispielsweise "knochenförmige" Wabenkörper. Um diese Formen herzustellen, wird vorgeschlagen, die Längen der Schlaufen nicht gleichmäßig zu gestalten, sondern diese Längen zu variieren. Dadurch werden sehr einfach Veränderungen der äußeren Form des Wabenkörpers erreicht.

Eine weitere Ausführungsform für Wabenkörper ist die S-förmige Anordnung von gestapelten, gewellten und glatten Blechen in einem Mantel. Auch diese Form der Ausgestaltung ist mit einem einteiligen Glattund/oder Wellband möglich. Hierbei wird ein Stapel aus zick-zack-förmig aufeinandergelegten Metallbändern erzeugt, der anschließend um zwei Fixpunkte verschlungen wird, wodurch sich die besagte S-förmige Anordnung ergibt.

Bevorzugte Ausführungsbeispiele der Erfindung, auf die diese jedoch nicht beschränkt ist, sind beispielhaft in der Zeichnung dargestellt und zwar zeigen:
- Fig. 1: den Aufbau eines erfindungsgemäßen Wabenkörpers im Querschnitt,
- Fig.2: einen Hohlwickel in schematischer Darstellung im Querschnitt, wie er als Ausgangsform zur Bildung eines erfindungsgemäßen Wabenkörpers dient,
- Fig. 3: einen Ausschnitt aus einem Querschnitt eines bereits teilweise sternförmig verformten Hohlwickels gemäß Fig. 2,
- Fig. 4: die Anordnung von Umkehrlinien bei der Bildung eines Wabenkörpers mit ovalem Querschnitt aus einem Hohlwikkel,
- Fig. 5: schematisch ein weiteres Ausführungsbeispiel mit auf mehrere konzentrische Kreise verteilten Umkehrlinien,
- Fig. 6: eine unregelmäßige Verteilung der Umkehrlinien,
- Fig. 7: einen Wabenkörper mit hohlem inneren Zentralbereich,
- Fig. 8: einen Wabenkörper mit unregelmäßiger Querschnittsform,
- Fig. 9: eine gewellte Blechlage mit einem integrierten elektrischen Leiter, wie er beim Aufbau eines erfindungsgemäßen Wabenkörpers Anwendung finden kann,
- Fig. 10: die schematische Darstellung eines runden Wabenkörpers,
- Fig. 11: die schematische Darstellung eines elliptischen Wabenkörpers,
- Fig. 12: den Wabenkörper vor dem Verschlingen, Schlaufen mit unterschiedlicher Länge,
- Fig. 13: den Wabenkörper nach dem Verschlingen, Schlaufen mit unterschiedlicher Länge,
- Fig. 14: das Wellband mit schräger Wellung,
- Fig. 15: den gefalteten Stapel,
- Fig. 16: den um zwei Fixpunkte verschlungenen Stapel,
- Fig. 17: den Wabenkörper mit verdrehten Blechbandabschnitten,
- Fig. 18: einen Ausschnitt aus den Blechbandabschnitten mit Steg,
- Fig. 19a: das kreisförmig aufgewickelte Wellband,
- Fig. 19b: das rosettenförmig eingezogene Wellband,
- Fig. 19c: den spiralförmig verschlungenen Wabenkörper,
- Fig. 20: das kreisförmig aufgewickelte Glatt- und Wellband, und
- Fig. 21: das rosettenförmig angeordnete Wellband mit eingeschobenen Glattbandabschnitten.

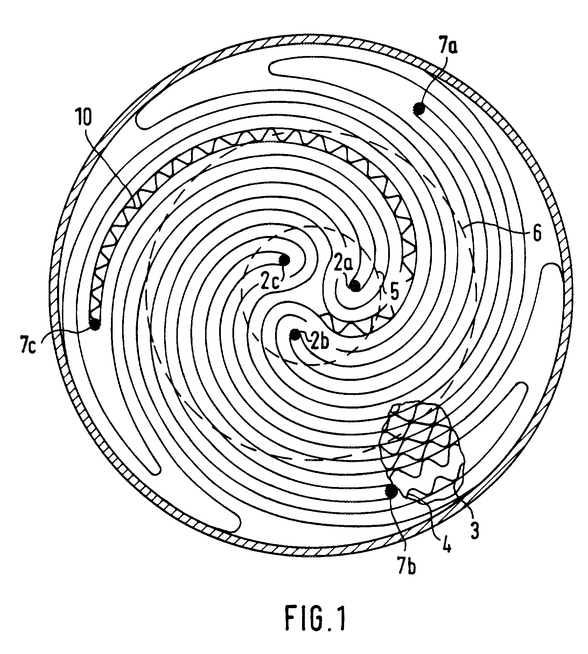

Fig. 1 zeigt schematisch im Querschnitt den Aufbau eines erfindungsgemäßen Wabenkörpers anhand eines runden Querschnittes. Der Wabenkörper besteht aus in einem Mantelrohr 1 angeordneten abwechselnden glatten 3 und gewellten 4 Blechlagen. In einem inneren Ringbereich 5 liegen drei oder mehr innere Umkehrlinien 2a, 2b, 2c, ... und in einem äußeren Ringbereich 6 liegen ebensoviele äußere Umkehrlinien 7a, 7b, 7c, ... . Die Blechlagen 3, 4 winden sich mit jeweils abwechselnder Krümmungsrichtung um diese Umkehrlinien und verlaufen zwischen je zwei Umkehrlinien gebogen, vorzugsweise etwa evolventenförmig. Die Berührungslinien der äußersten Blechlage mit dem Mantelrohr 1 können dabei, zumindest in Teilbereichen, mit diesem durch Hartlöten verbunden sein. Zur Vermeidung von aneinanderliegenden Blechlagen gleicher Struktur können zusätzliche Zwischenlagen 10 vorgesehen werden, die in einem Zwischenschritt beim Verformen eingelegt werden.

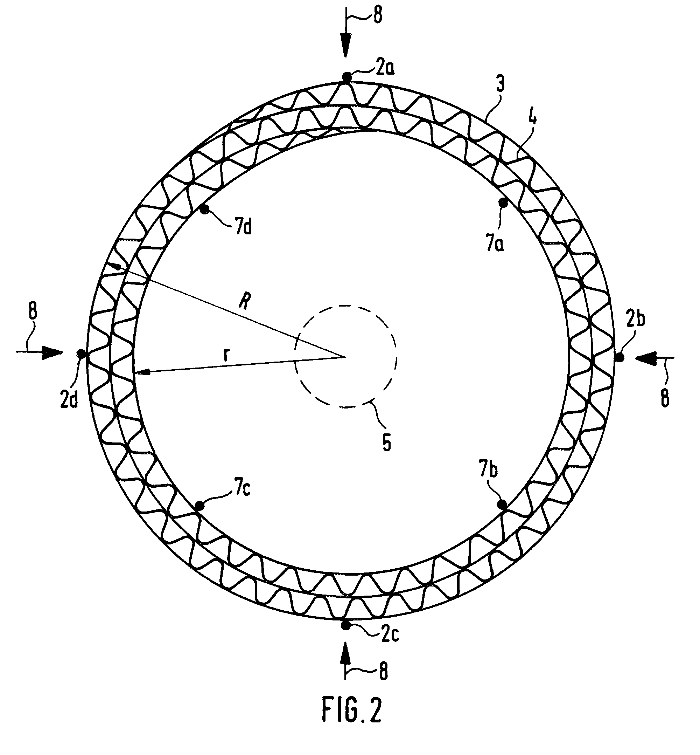

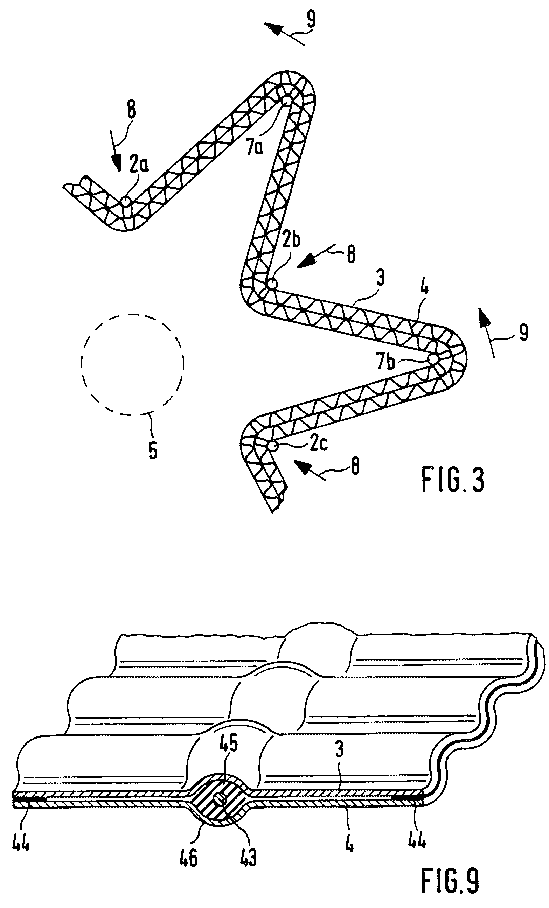

Fig. 2 zeigt einen schematischen Querschnitt eines Hohlwickels, aus welchem ein erfindungsgemäßer Wabenkörper hergestellt werden kann. Der Hohlwickel besteht bei diesem Ausführungsbeispiel aus einem glatten Blech 3 und einem gewellten Blech 4, welche abwechselnd spiralförmig zu einem Hohlzylinder aufgewickelt sind. Dieser Hohlzylinder hat einen Außenradius R und einen Innenradius r. Durch Eindrücken des Hohlwickels an den Umkehrlinien 2a, 2b, 2c, 2d kann dieser zu einer sternförmigen Struktur verformt werden. Unter Umständen muß dabei der Hohlwickel von innen an den Umkehrlinien 7a, 7b, 7c, 7d gestützt werden, um eine gleichmäßig Verformung zu erreichen. Als Ergebnis dieser Verformung liegen die Umkehrlinien 2a, 2b, 2c, 2d in dem inneren Ringbereich 5, während die Umkehrlinien 7a, 7b, 7c, 7d zunächst die "Zacken" eines Sterns bilden. Ein Zwischenzustand auf dem Weg zu dieser Form ist in einem schematischen Ausschnitt in Fig. 3 dargestellt. Die Pfeile 8 deuten die Bewegungsrichtung der Umkehrlinien 2a, 2b, 2c, 2d nach innen an. Werden jetzt, wie mit Pfeilen 9 angedeutet, die "Zacken" des Sterns durch gleichsinniges drehendes Verschlingen der äußeren Umkehrlinien 7a, 7b, 7c, 7d gegenüber den inneren Umkehrlinien 2a, 2b, 2c, 2d zu einem dichten Körper kompaktiert, so entsteht die gewünschte Form eines Wabenkörpers.

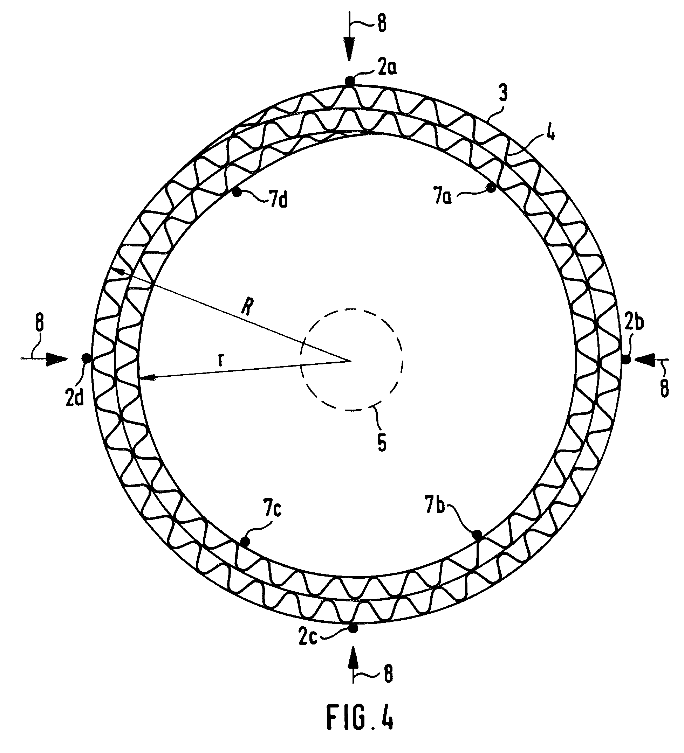

Fig. 4 zeigt die anfängliche Anordnung der Umkehrlinien 7a, 7b, 7c, 7d und 2a, 2b, 2c, 2d zur Bildung eines ovalen Wabenkörpers. Die Umkehrpunkte 7a, 7b, 7c, 7d sind nicht gleichmäßig über den Innenumfang des Hohlwickels verteilt, sondern liegen auf den Ecken eines Rechteckes (anstatt eines Quadrates wie in Fig. 2), so daß sich beim sternförmigen Verformen und späteren Verschlingen ein ovaler Querschnitt bildet.

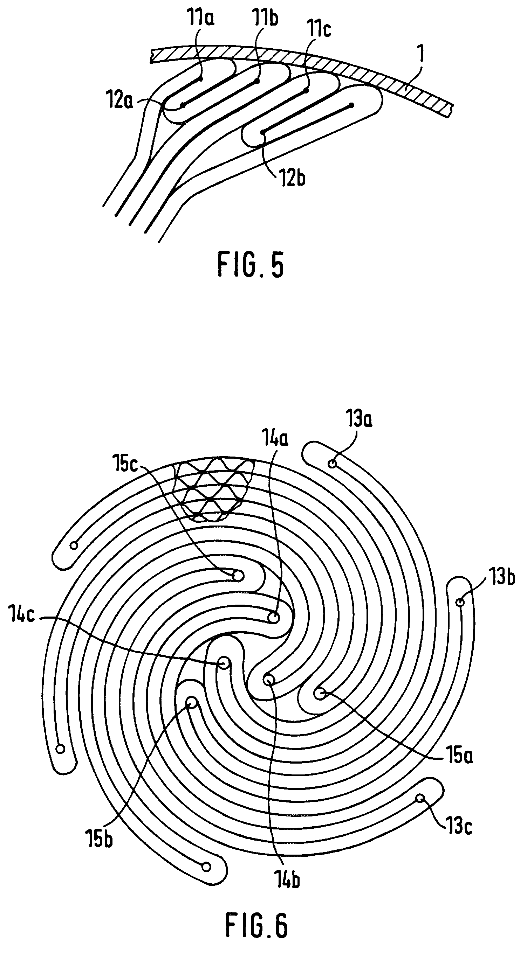

Fig. 5 zeigt ein Ausführungsbeispiel, welches bevorzugt dann angewendet werden kann, wenn im Außenbereich eine größere Zahl von Anbindungspunkten an den Mantel 1 und ein steilerer Auftreffwinkel der äußeren Blechlage gewünscht wird. Durch zusätzliche Umkehrpunkte 11a, 11b, 11c und 12a, 12b ... kann die gewünschte Struktur im Außenbereich ebenfalls aus einem Hohlwickel gebildet werden.

Fig. 6 zeigt schematisch, wie man bei einer größeren Zahl von äußeren Umkehrlinien 13a, 13b, 13c, und inneren Umkehrlinien 14a, 14b, 14c, ... und 15a, 15b, 15c, ... einen zu großen inneren Hohlraum vermeiden kann, wenn dieser unerwünscht ist. Hierzu liegt ein Teil der inneren Umkehrlinien 14a, 14b, 14c auf einem Kreis mit kleinerem Radius als die anderen inneren Umkehrlinien 15a, 15b, 15c.

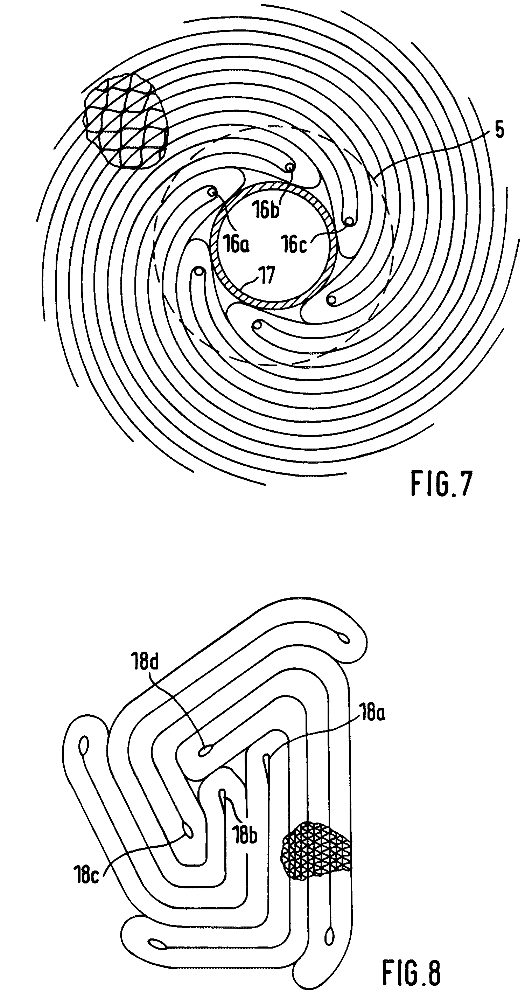

Fig. 7 zeigt im Gegensatz dazu, wie ein hohler innerer Zentralbereich, umgeben von einem Rohr 17 gebildet wird, in dem alle inneren Umkehrlinien 16a, 16b, 16c, ... auf einem konzentrischen Kreis im Inneren des inneren Ringbereiches 5 liegen.

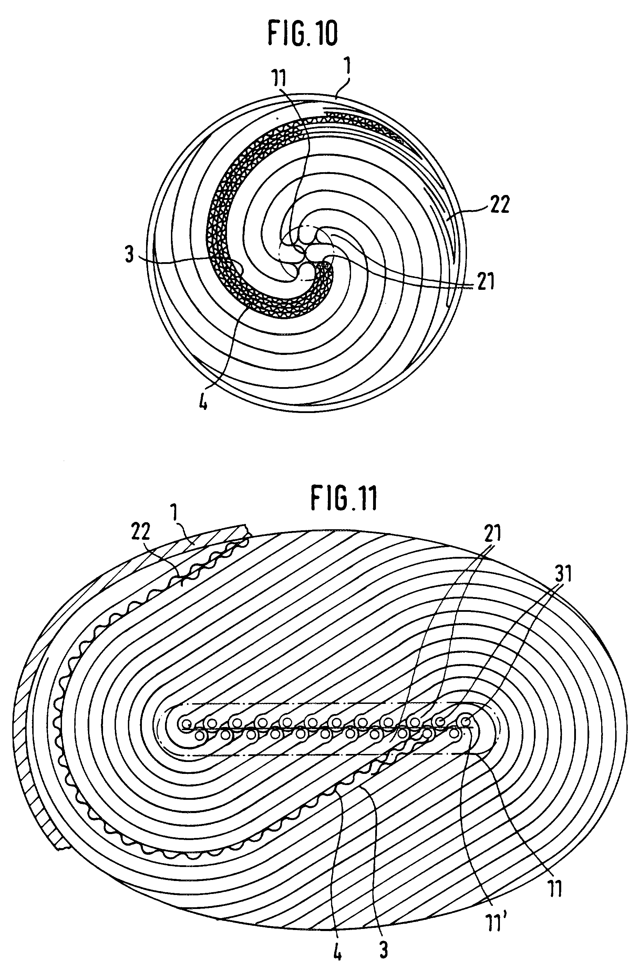

Fig. 8 zeigt schematisch ein Beispiel, wie unregelmäßige Querschnitte erfindungsgemäß ausgefüllt werden können. Hier liegen die inneren Umkehrlinien 18a, 18b, 18c, 18d unregelmäßig im Inneren, wodurch sich beim Verschlingen ein entsprechender unregelmäßiger Querschnitt auffüllen läßt.

Fig. 9 schließlich zeigt, wie ein elektrischer Leiter 43, durch eine Isolierung 45 getrennt, innerhalb einer Blechlage angeordnet werden kann, indem die Blechlage aus zwei einzelnen Blechen 3, 4 besteht. Die Bleche 3, 4 weisen auf einer oder beiden Seiten eine Ausbauchung 46 auf, in welche der elektrische Leiter 43 eingelegt ist. Die einzelnen Bleche können an ihren Stirnseiten durch eine Hartlötverbindung 44 verbunden sein.

An dem beschriebenen Herstellungsverfahren für Wabenkörper ändert sich praktisch nichts, wenn statt einer einfachen gewellten Lage eine Doppellage mit integriertem elektrischen Leiter gemäß Fig. 9 verwendet wird.

Die vorliegende Erfindung eignet sich besonders für die Herstellung von metallischen Katalysator-Trägerkörpern für Kraftfahrzeuge in Großserienproduktion, wobei die so hergestellten Wabenkörper aufgrund ihres symmetrischen Aufbaus und der etwa evolventenförmig verlaufenden Lagen besonders widerstandsfähig gegen thermische Wechselbelastungen und hohe mechanische Beanspruchungen sind.

In Fig. 10 ist ein kreisrunder Wabenkörper schematisch dargestellt. Hierbei sind schlaufenförmig aufeinandergelegte Blechlagen 3, 4 in einem inneren Ringbereich 5 angeordnet, der koaxial um das Zentrum 11 des Wabenkörpers angeordnet ist, und um dieses Zentrum 11 herum verschlungen. Die radial inneren Schlaufen 21 füllen dabei das Zentrum 11 vollständig aus. Die radial äußeren Schlaufen 22 berühren mit ihren Außenseiten einen umhüllenden Mantel 1 und sind mit diesem fügetechnisch oder formschlüssig verbunden. Die Struktur des Wabenkörpers ist annähernd spiralförmig, wobei die Spiralen etwa in dem kreisförmigen Zentrum 11 entspringen. Der Abstand der Spiralen zueinander ist konstant, da er durch die Amplitude der Blechlagen 3, 4 vorgegeben ist.

In Fig. 11 wird ein ellipsenförmiger Wabenkörper gezeigt. Hierbei sind die Blechlagen 3, 4 schlaufenförmig aufeinandergelegt und mit den radial inneren Schlaufen 21 zu einem streifenförmigen Zentrum 11 gezogen, das in der Mitte des Wabenkörpers angeordnet ist und die Gerade 11' umgibt, die die Brennpunkte der Ellipse verbindet. Die inneren Schlaufen 21 füllen dabei das Zentrum 11 vollständig aus. Die radial äußeren Schlaufen 22 sind um das Zentrum 11 herum verschlungen, wobei die einzelnen Lagen der Bleche 3, 4 aufeinander zu liegen kommen. Die Struktur des Wabenkörpers ist hierbei ebenfalls spiralförmig. Die Anzahl der Schlaufen 21, 22 hängt von der Größe der zu füllenden Fläche des Wabenkörpers ab. In diesem Beispiel sind 23 innere Schlaufen 21 um die Einziehdorne 31 herum gefaltet und zu dem Zentrum 11 gezogen. Die Anzahl der inneren Schlaufen 21 bzw. der Einziehdorne 31 kann beliebig in ganzzahligen Schritten erhöht oder erniedrigt werden. Die äußeren Schlaufen 22 liegen mit den Wellungen der Blechlagen 3, 4 am umgebenden Mantel 1 an und sind mit diesem fügetechnisch oder formschlüssig verbunden.

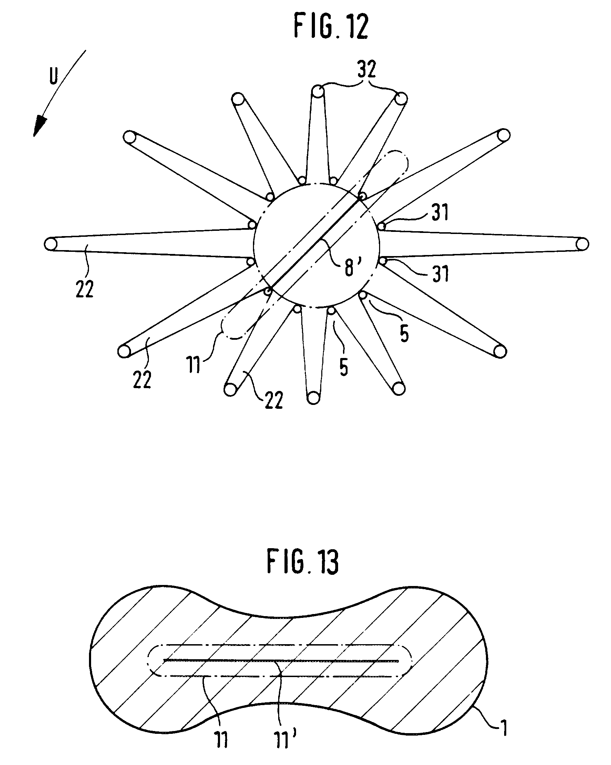

Fig. 12 zeigt einen Wabenkörper mit Schlaufen unterschiedlicher Länge vor dem Verschlingen. Hierbei sind über die Wickeldorne 32 verlaufenden Blechlagen 3, 4 von den Einziehdornen 31 in unterschiedlichen Teilungen eingezogen worden, so daß sich eine unterschiedliche Schlaufenlänge ergibt. Die Einziehdorne 31 werden zu dem streifenförmigen Zentrum 11 gezogen, wobei die Einziehdorne 31 dieses Zentrum 11 im Beispiel noch nicht erreicht haben. Die äußeren Schlaufen 22 werden anschließend in Umschlingungsrichtung U um das Zentrum 11 herumgeschlungen, wobei die Wickeldorne 32 vorher entfernt werden.

Fig. 13 zeigt einen "knochenförmigen" Wabenkörper, der aus schlaufenförmig angeordneten Blechlagen 3, 4 hergestellt ist, wie es in Fig. 12 gezeigt ist. Das Zentrum 11 ist hierbei streifenförmig, es schließt die Gerade 11' ein, die die Brennpunkte der beiden keulenförmigen Enden verbindet. Der Wabenkörper ist in einen Mantel 1 eingesetzt und mit diesem fügetechnisch oder formschlüssig verbunden.

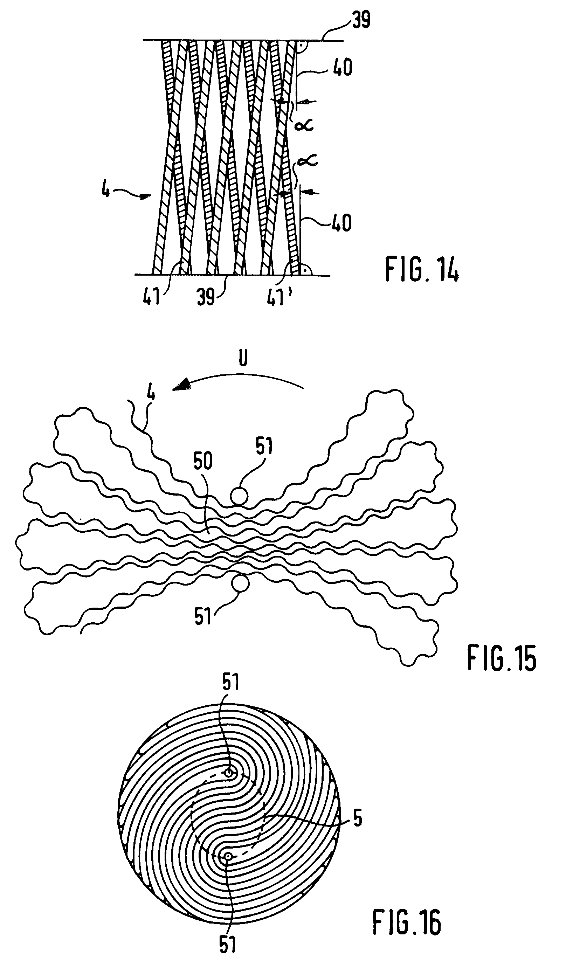

Fig. 14 zeigt ein Wellband 4 mit schräger Wellung. Die Wellen 41 weichen hierbei um den Winkel α von der Senkrechten 40 auf die Kanten 39 des Bandes 4 ab. Durch das Umklappen des Wellbandes 4 in den Scheiteln der Schlaufen 21, 22 kommen somit zwei Lagen des Wellbandes 4 aufeinander zu liegen, bei denen die Wellung 41 jeweils die entgegengesetzte Richtung zu der darunterliegenden Wellbandlage ausgelenkt ist, so daß sich die Wellungen 41 einer Wellbandlage 4 mit den Wellungen 41' der darunterliegenden Wellbandlage 7 im spitzen Winkel kreuzen.

Fig. 15 zeigt einen Stapel 50 mit zick-zack-förmig aufeinandergefalteten Wellbandlagen 4, der zwischen zwei Fixpunkten 51 gehalten ist. Die Enden des Stapels 50 werden in Umschlingungsrichtung um die Fixpunkte 51 herumgeschlungen, so daß sich ein Wabenkörper ergibt, dessen Lagen etwa S-förmig angeordnet sind. Einen derartigen Wabenkörper zeigt die Fig. 16.

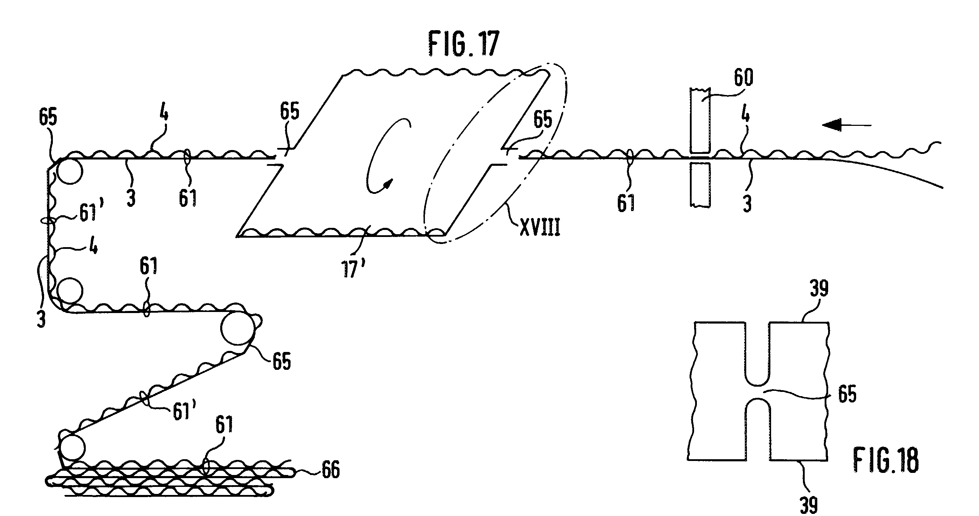

Fig. 17 zeigt schematisch eine Einrichtung zur Herstellung eines Wabenkörpers. Der Einrichtung werden ein Wellband 4 und ein Glattband 3 zugeführt. In einer Stanzvorrichtung 60 werden aus den Bändern 3, 4 von den Kanten 39 her streifenförmige Anteile ausgestanzt, so daß lediglich ein schmaler Steg 65 in der Längsachse der Bänder 3, 4 bestehen bleibt. Im weiteren Verlauf der Einrichtung werden die Bandabschnitte 61' gegenüber den Bandabschnitten 61 um 180° um die Längsachse verdreht, wobei die Stege 65 spiralförmig aufgedreht werden. In einer Falteinrichtung werden die gegeneinander verdrehten Bandabschnitte 61, 61' aufgestapelt, wobei die Stege 65 an den Scheitelpunkten 66 der Schlaufen angeordnet sind.

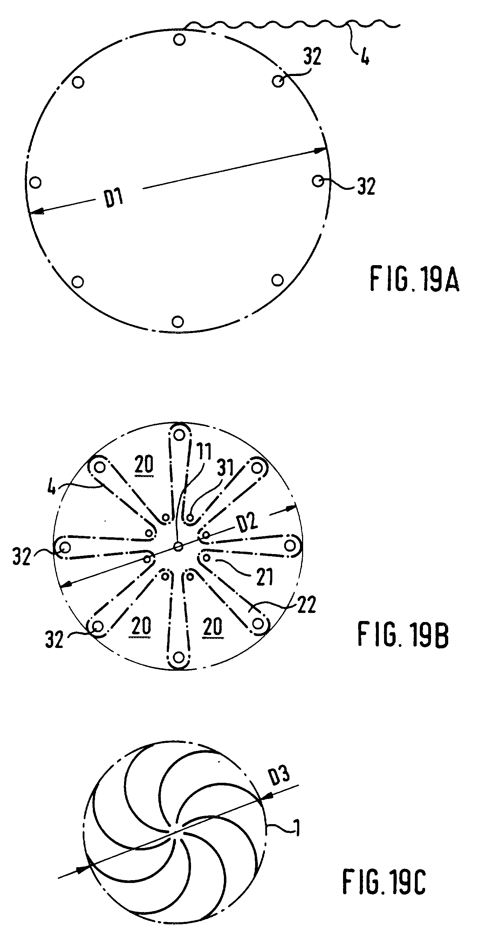

Die Fig. 19a bis 19c illustrieren die Herstellung eines weiteren Wabenkörpers. Das Wellband 4 wird einer aus den Wickeldornen 32 bestehenden Wickeleinrichtung zugeführt und zu einem Hohlwickel aufgewickelt. Der Innendurchmesser D1 des Hohlwickels wird durch die Lage der Wickeldorne 32 bestimmt. Im nächsten Fertigungsschritt werden Einziehdorne 31 an den Hohlwickel herangebracht und zwischen den Wickeldornen 32 zum Zentrum 11 des Wabenkörpers verschoben. Der Hohlwickel wird durch das Einziehen von Kreissektoren 20 zu einer Rosettenform verformt. Die Wickeldorne 32 werden dabei zum Zentrum 11 hin verschoben, wodurch der Außendurchmesser D2 der Rosette kleiner ist als der Innendurchmesser D1 des Hohlwickels. Die in den radial äußeren Schlaufen 22 befindlichen Wickeldorne 32 werden entfernt, während die Einziehdorne 31 in den radial inneren Schlaufen 21 verbleiben und während des nachfolgenden Verschlingungsvorgangs die inneren Schlaufen 21 im Zentrum 11 fixieren. Nach dem Verschlingen werden auch die Einziehdorne 31 aus den inneren Schlaufen 21 entfernt, womit letztendlich ein Wabenkörper übrig bleibt, der lediglich aus dem Wellband 4 besteht. Das Wellband 4 ist in dem Wabenkörper spiralförmig angeordnet. Der Außendurchmesser D3 des Wabenkörpers ist kleiner als der Außendurchmesser D2 der Rosettenform.

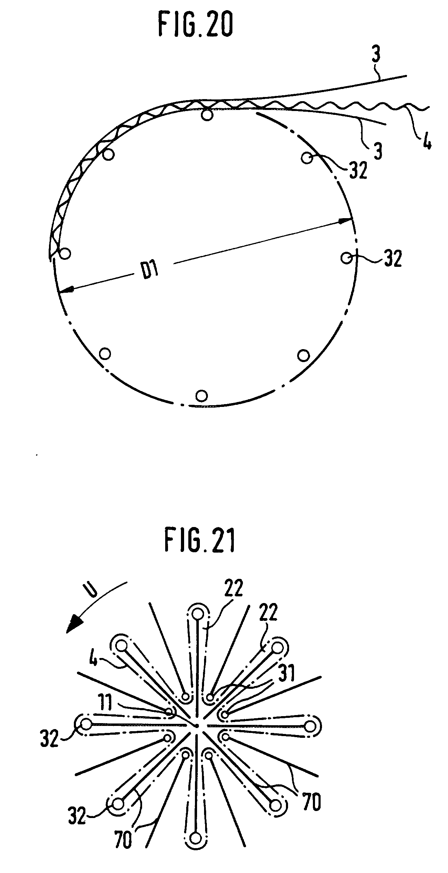

Fig. 20 zeigt die Herstellung eines weiteren Wabenkörpers, wobei ein Wellband 4 und zwei Glattbänder 3 gleichzeitig zu einem Hohlwickel aufgewickelt werden. Das Wellband 4 liegt dabei zwischen zwei Glattbändern 3, so daß sowohl die Innenseiten als auch die Außenseite des Hohlwickels aus Glattband bestehen. Die übrigen Fertigungsschritte laufen analog zu den in Fig. 19b und 19c beschriebenen Fertigungsschritten ab.

Fig. 21 zeigt ein Glattband 3, das zu einer Rosettenform eingezogen ist. In die Zwischenräume zwischen den Wellbändern 4 sind glatte Blechabschnitte 70 eingefügt. Die Blechabschnitte 70 verlaufen einerseits zum Zentrum 11 zu den Wickeldornen 32 und andererseits von den Einziehdornen 31 nach außen, womit die einzelnen Lagen des Wellbandes 4 durch jeweils einen glatten Blechabschnitt 70 getrennt sind. Nach dem Entfernen der Wickeldorne 32 werden die äußeren Schlaufen 22 in Umschlingungsrichtung U um das Zentrum 11 herumgeschlungen.

## Patentansprüche

1. Metallischer Wabenkörper mit zumindest teilweise strukturierten Blechlagen (3; 4), die gekrümmt, insbesondere etwa evolventenförmig von einem inneren Ringbereich (5) in einem Zentrumsbereich zu einem äußeren Ringbereich (6) in einem Mantelbereich hinverlaufen,
**dadurch gekennzeichnet**,
daß die Blechlagen (3; 4) zwischen dem äußeren Ringbereich (6) und dem inneren Ringbereich (5) abwechselnd hin- und her verlaufen und Schlaufen (21, 22) bilden, wobei der Körper in dem äußeren Ringbereich (6) in der Nähe eines Mantels mindestens drei Umkehrlinien (2a, 2b, 2c ... bzw. 7a, 7b, 7c ...; 13a, 13b, 13c ... bzw. 14a, 14b, 14c ...; 15a, 15b, 15c ...; 16a, 16b, 16c...; 18a, 18b, 18c ...) aufweist, um welche die Blechlagen (3, 4) verschlungen sind.

2. Wabenkörper nach Anspruch 1, wobei die Zahl der Umkehrlinien (2a, 2b, 2c, ... bzw. 7a, 7b, 7c, ...) außen und innen je mindestens drei, vorzugsweise vier, ist.

3. Wabenkörper nach Anspruch 1 oder 2, wobei ein innerer Zentralbereich (17) des Wabenkörpers innerhalb des inneren Ringbereiches (5) hohl ist.

4. Wabenkörper nach Anspruch 1, 2 oder 3, wobei der Wabenkörper aus ein bis fünf Blechstreifen (3, 4) besteht, die zumindest teilweise eine wellenartige Struktur aufweisen.

5. Wabenkörper nach einem der vorhergehenden Ansprüche, wobei die Umkehrlinien (11a, 11b, 11c, ...; 12a, 12b, 12c, ...; 13a, 13b, 13c, ...; 14a, 14b, 14c, ...; 15a, 15b, 15c, ...; 16a, 16b, 16c, ...) auf zwei oder mehreren konzentrischen Kreisen angeordnet sind.

6. Wabenkörper nach einem der Ansprüche 1 bis 4, wobei die Umkehrlinien (18a, 18b, 18c, ...) unregelmäßig entsprechend der Querschnittsform des Wabenkörpers angeordnet sind.

7. Wabenkörper nach einem der vorhergehenden Ansprüche, wobei der Wabenkörper von einem Mantelrohr (1) umgeben und die äußerste Blechlage zumindest in Teilbereichen ihrer Berührungslinien mit dem Mantelrohr (1) durch Hartlöten verbunden ist.

8. Wabenkörper nach einem der vorhergehenden Ansprüche, wobei die Blechlagen (3, 4) untereinander zumindest in Teilbereichen ihrer Berührungslinien, vorzugsweise im Bereich einer oder beider Stirnseiten, durch Hartlöten verbunden sind.

9. Wabenkörper nach Anspruch 1 oder 2, wobei die Schlaufen (21, 22) mit ihren radial inneren Bereichen (21) das Zentrum (11) nahezu vollständig ausfüllen.

10. Wabenkörper nach einem der vorhergehenden Ansprüche, wobei die Wellung eines gewellten Metallbandes (4) in einem Winkel (α) von 2° bis 10° von der senkrechten (40) auf die Längskante (39) des Metallbandes (4) abweicht.

11. Wabenkörper nach einem der vorhergehenden Ansprüche, wobei einzelne glatte oder gewellte Blechstreifen (10) zwischen benachbarte gewellte bzw. glatte Blechlagen (4, 3) eingefügt sind, um doppelte Lagen zu vermeiden.

12. Wabenkörper nach einem der vorhergehenden Ansprüche, wobei der Wabenkörper mindestens eine Blechlage (3, 4) enthält, in welche mindestens ein elektrisch von der Blechlage (3, 4) isolierter elektrischer Leiter (43) integriert ist, der als Heizleiter und/oder als Meßfühler ausgebildet ist.

13. Wabenkörper nach Anspruch 12, wobei die Blechlage (3, 4) mit dem elektrischen Leiter (43) eine gewellte Blechlage ist aus zwei Blechstreifen (3, 4) zwischen denen der elektrische Leiter (43) angeordnet ist, vorzugsweise eingewalzt.

14. Wabenkörper nach Anspruch 1 bis 10, wobei der Wabenkörper aus einem gewellten (4) und zwei glatten Metallbändern (3) besteht, wobei das gewellte Metallband (4) zwischen den beiden glatten Metallbändern (3) angeordnet ist.

15. Wabenkörper nach Anspruch 1 bis 10, wobei der Wabenkörper aus mehreren gewellten (4) und glatten Metallbändern (3) besteht, wobei die gewellten Metallbänder (4) zwischen den glatten Metallbändern (3) angeordnet sind.

16. Wabenkörper nach Anspruch 1 bis 10, wobei zwischen jede Lage des gewellten Metallbandes (4) einzelne Blechabschnitte (70) eingeschoben sind.

17. Wabenkörper nach Anspruch 1 bis 10, wobei der Wabenkörper aus einem glatten Metallband (3) und/oder einem gewellten Metallband (4) besteht, wobei die Metallbänder (3, 4) in den Scheitelpunkten (66) der Schlaufen (21, 22) bis auf einen schmalen Steg (65) von beiden Kanten (39) her eingeschnitten und die Bandabschnitten (61, 61') zu den jeweils nachfolgenden Bandabschnitten (61', 61) um 180° um die Längsachse verdreht sind.

18. Wabenkörper nach Anspruch 1, wobei die Blechlagen (3, 4) in einem Stapel (50) angeordnet sind, dessen Enden etwa S-förmig um zwei Fixpunkte (51) herumgeschlungen sind, dadurch gekennzeichnet, daß der Stapel aus Zick-Zack-förmig aufeinander gefaltetem Glattband (3) und/oder Wellband (4) gebildet ist.

19. Verfahren zur Herstellung eines metallischen Wabenkörpers aus zumindest teilweise strukturierten Blechlagen (3, 4), insbesondere nach Anspruch 1, mit folgenden Schritten:
a) Aus ein bis zehn, vorzugsweise drei bis fünf Blechstreifen (3, 4), die zumindest teilweise eine Struktur aufweisen, wird ein Hohlwickel, d. h. ein mehrlagiger Kreisring aus einer Mehrzahl, vorzugsweise drei bis zehn Blechlagen hergestellt.
b) Der Hohlwickel bzw. Kreisring wird an mindestens drei Linien von außen nach innen verformt, so daß sich entsprechend viele Umkehrlinien (2a, 2b, 2c, ... bzw. 7, 7b, 7c; 13a, 13b, 13c, ... bzw. 14a, 14b, 14c ...; 15a, 15b, 15c...; 16a, 16b, 16c, ...; 18a, 18b, 18c, ...) sowohl in einem äußeren Ringbereich (6) wie auch in einem inneren Ringbereich (5) bilden.
c) Die entstehende sternähnliche bzw. rosettenähnliche, schlaufenaufweisende Struktur wird durch gleichsinniges drehendes Verschlingen der sich zwischen den inneren Umkehrlinien und den äußeren Umkehrlinien erstreckenden Schlaufen um die inneren Umkehrlinien kompaktiert.

20. Verfahren nach Anspruch 19, wobei der Hohlwickel an mindestens vier Linien (2a, 2b, 2c, 2d, ...) von außen nach innen verformt wird.

21. Verfahren nach Anspruch 20, wobei die Linien (2a, 2b, 2c, 2d, ...) in Umfangsrichtung unterschiedliche Abstände voneinander haben.

22. Verfahren nach Anspruch 9, 20 oder 21, wobei die Verformung (8) nach innen nur bis zur Grenze eines hohlen inneren Zentralbereiches (17) erfolgt.

23. Verfahren nach Anspruch 19, 20, 21 oder 22, wobei mindestens einer der Blechstreifen aus zwei eng aneinanderliegenden Blechlagen (3, 4) gebildet ist, zwischen denen mindestens ein elektrischer Leiter (43) elektrisch isoliert (45) integriert ist.

24. Verfahren nach Anspruch 19, 20, 21, 22 oder 23, wobei beim Aufwickeln des Hohlwikkels ein glattes (3), ein gewelltes (4) und wieder ein glattes Metallband (3) gleichzeitig zugeführt werden.

25. Verfahren nach Anspruch 19 bis 24, wobei für Wabenkörper mit Querschnittsformen, die von der Kreisform abweichen, Kreisringsektoren (20) zu einem zentralen Bereiche (11) eingezogen werden, wobei der zentrale Bereich (11, 12) etwa linienförmig ausgebildet ist.

26. Verfahren nach Anspruch 19 bis 25, wobei für Wabenkörper mit Sonderquerschnittsformen die Längen der Schlaufen (22) ungleich und an die Querschnittsform des Wabenkörpers angepaßt sind.

## Claims

1. A metal honeycomb body with at least partially structured sheet metal layers (3; 4) which extend in a curved and in particular approximately involute configuration from an inner annular region (5) in a central region to an outer annular region (6) in a casing region, characterised in that the sheet metal layers (3; 4) extend alternately to and fro between the outer annular region (6) and the inner annular region (5) and form loops (21, 22), wherein in the outer annular region (6) in the vicinity of a casing the body has at least three reversal lines (2a, 2b, 2c ... and 7a, 7b, 7c...; 13a, 13b, 13c ... and 14a, 14b, 14c ...; 15a, 15b, 15c ...; 16a, 16b, 16c ...; 18a, 18b, 18c ...) around which the sheet metal layers (3, 4) are wound.

2. A honeycomb body according to claim 1 wherein the number of reversal lines (2a, 2b, 2c ... and 7a, 7b, 7c ...) at outside and inside are each at least three, preferably four.

3. A honeycomb body according to claim 1 or claim 2 wherein an inner central region (17) of the honeycomb body within the inner annular region (5) is hollow.

4. A honeycomb body according to claims 1, 2 or 3 wherein the honeycomb body comprises one to five sheet metal strips (3, 4) which at least partially have a wavey structure.

5. A honeycomb body according to one of the preceding claims wherein the reversal lines (11a, 11b, 11c, ...; 12a, 12b, 12c ...; 13a, 13b, 13c ...; 14a, 14b, 14c ...; 15a, 15b, 15c ...; 16a, 16b, 16c ...) are arranged on two or more concentric circles.

6. A honeycomb body according to one of claims 1 to 4 wherein the reversal lines (18a, 18b, 18c ...) are arranged irregularly in accordance with the cross-sectional shape of the honeycomb body.

7. A honeycomb body according to one of the preceding claims wherein the honeycomb body is surrounded by a casing tube (1) and the outermost sheet metal layer is connected at least in portions of its contact lines to the casing tube (1) by brazing.

8. A honeycomb body according to one of the preceding claims wherein the sheet metal layers (3, 4) are connected together at least in portions of their contact lines, preferably in the region of one or both ends, by brazing.

9. A honeycomb body according to claim 1 or claim 2 wherein the loops (21, 22) with their radially inner regions (21) almost completely fill the centre (11).

10. A honeycomb body according to one of the preceding claims wherein the corrugation configuration of a corrugated metal strip (4) differs at an angle (α) of from 2° to 10° from the line (40) normal to the longitudinal edge (39) of the metal strip (4).

11. A honeycomb body according to one of the preceding claims wherein individual smooth or corrugated sheet metal strips (10) are inserted between adjacent corrugated or smooth metal strips (4, 3) respectively in order to avoid double layers.

12. A honeycomb body according to one of the preceding claims wherein the honeycomb body includes at least one sheet metal layer (3, 4) into which is integrated at least one electrical conductor (43) which is electrically insulated from the sheet metal layer (3, 4) and which is in the form of a heating conductor and/or a measuring sensor.

13. A honeycomb body according to claim 12 wherein the sheet metal layer (3, 4) with the electrical conductor (43) is a corrugated sheet metal layer comprising two sheet metal strips (3, 4) between which the electrical conductor (43) is arranged, preferably by being rolled in.

14. A honeycomb body according to claims 1 to 10 wherein the honeycomb body comprises a corrugated (4) and two smooth metal strips (3), wherein the corrugated metal strip (4) is arranged between the two smooth metal strips (3).

15. A honeycomb body according to claims 1 to 10 wherein the honeycomb body comprises a plurality of corrugated (4) and smooth metal strips (3), wherein the corrugated metal strips (4) are arranged between the smooth metal strips (3).

16. A honeycomb body according to claims 1 to 10 wherein individual sheet metal portions (70) are inserted between each layer of the corrugated metal strip (4).

17. A honeycomb body according to claims 1 to 10 wherein the honeycomb body comprises a smooth metal strip (3) and/or a corrugated metal strip (4), wherein the metal strips (3, 4) are cut into from both edges (39) to form a narrow web portion (65) at the apex points (66) of the loops (21, 22) and the strip portions (61, 61') are turned about the longitudinal axis through 180° relative to the respectively following strip portions (61', 61).

18. A honeycomb body according to claim 1 wherein the sheet metal layers (3, 4) are arranged in a stack (50) whose ends are wound approximately in a S-shape around two fixed points (51), characterised in that the stack is formed from smooth strip (3) and/or corrugated strip (4), folded in a zig-zag configuration on to each other.

19. A process for the production of a metal honeycomb body comprising at least partially structured sheet metal layers (3, 4), in particular according to claim 1, with the following steps:
a) produced from one to ten and preferably from three to five sheet metal strips (3, 4) which at least partially have a structure is a hollow winding, that is to say a multi-layer circular ring comprising a plurality of and preferably from three to ten sheet metal layers.
b) The hollow winding or circular ring is deformed from the outside inwardly at at least three lines so that a corresponding number of reversal lines (2a, 2b, 2c ... and 7a, 7b, 7c; 13a, 13b, 13c ... and 14a, 14b, 14c ...; 15a, 15b, 15c ...; 16a, 16b, 16c ...; 18a, 18b, 18c ...) are formed both in an outer annular region (6) and also in an inner annular region (5).
c) The resulting star-like or rosette-like loop-forming structure is compacted by rotational winding in the same direction of the loops which extend between the inner reversal lines and the outer reversal lines, around the inner reversal lines.

20. A process according to claim 19 wherein the hollow winding is deformed from the outside inwardly at at least four lines (2a, 2b, 2c, 2d ... ).

21. A process according to claim 20 wherein the lines (2a, 2b, 2c, 2d ...) are at different spacings from each other in the peripheral direction.

22. A process according to claims 19, 20 or 21 wherein the deformation (8) is effected inwardly only as far as the limit of a hollow inner central region (17).

23. A process according to claims 19, 20, 21 or 22 wherein at least one of the sheet metal strips is formed from two sheet metal layers (3, 4) which bear closely against each other and between which at least one electrical conductor (43) is integrated in electrically insulated manner (45).

24. A process according to claims 19, 20, 21, 22 or 23 wherein in the operation of winding on the hollow winding a smooth (3), a corrugated (4) and again a smooth metal strip (3)are simultaneously fed thereto.

25. A process according to claims 19 to 24 wherein for honeycomb bodies of cross-sectional shapes which differ from a circular shape, circular ring sectors (20) are drawn in to a central region (11), wherein the central region (11, 12) is of an approximately linear configuration.

26. A process according to claims 19 to 25 wherein for honeycomb bodies of special cross-sectional shapes the lengths of the loops (22) are unequal and are adapted to the cross-sectional shape of the honeycomb body.

## Revendications

1. Corps alvéolaire métallique comportant des couches (3 ; 4) de tôles au moins partiellement structurées qui, cintrées, notamment sous la forme approximative d'une développante, s'étendent d'une zone annulaire intérieure (5) située dans une zone centrale vers une zone annulaire extérieure (6) située dans une zone d'enveloppe,
caractérisé en ce que,
les couches (3 ; 4) de tôles s'étendent alternativement en va-et-vient entre la zone annulaire extérieure (6) et la zone annulaire intérieure (5) et forment des boucles (21, 22), le corps comportant dans la zone annulaire extérieure (6) à proximité d'une enveloppe au moins trois lignes d'inversion (2a, 2b, 2c ... ou 7a, 7b, 7c ... ; 13a, 13b, 13c ... ou 14a, 14b, 14c ... ; 15a, 15b, 15c ... ; 16a, 16b, 16c ... ; 18a, 18b, 18c ...) autour desquelles sont enroulées les couches (3, 4) de tôles.

2. Corps alvéolaire selon la revendication 1, dans lequel le nombre de lignes d'inversion (2a, 2b, 2c, ... ou 7a, 7b, 7c, ...) à l'extérieur et à l'intérieur est respectivement au moins de trois, de préférence de quatre.

3. Corps alvéolaire selon la revendication 1 ou 2, dans lequel une zone centrale intérieure (17) du corps alvéolaire est creuse au sein de la zone annulaire intérieure (5) .

4. Corps alvéolaire selon les revendications 1, 2 ou 3, le corps alvéolaire étant constitué d'une à cinq couches (3, 4) de tôles qui comportent au moins partiellement une structure du type ondulé.

5. Corps alvéolaire selon l'une quelconque des revendications précédentes, dans lequel les lignes d'inversion (11a, 11b, 11c, ... ; 12a, 12b, 12c, ... ; 13a, 13b, 13c, ... ; 14a, 14b, 14c, ... ; 15a, 15b, 15c, ... ; 16a, 16b, 16c, ...) sont disposées sur deux ou plusieurs cercles concentriques.

6. Corps alvéolaire selon l'une des revendications 1 à 4, dans lequel les lignes d'inversion (18a, 18b, 18c, ...) sont disposées irrégulièrement en fonction de la forme de la section transversale du corps alvéolaire.

7. Corps alvéolaire selon l'une quelconque des revendications précédentes, le corps alvéolaire étant entouré d'un tube de protection (1) et la couche extérieure de tôles étant reliée au tube de protection (1) au moyen d'un brasage fort, au moins dans des zones partielles de ses lignes de contact.

8. Corps alvéolaire selon l'une quelconque des revendications précédentes, dans lequel les couches (3, 4) de tôles sont reliées entre elles au moyen d'un brasage fort, au moins dans des zones partielles de leurs lignes de contact, de préférence au niveau de l'une ou des deux faces frontales.

9. Corps alvéolaire selon la revendication 1 ou 2, dans lequel les boucles (21, 22) remplissent presque entièrement le centre (11) par leurs zones radiales intérieures (21).

10. Corps alvéolaire selon l'une quelconque des revendications précédentes, dans lequel l'ondulation d'une bande métallique ondulée (4) dévie d'un angle (α) de 2° à 10° par rapport à la verticale (40) vers le bord longitudinal (39) de la bande métallique (4).

11. Corps alvéolaire selon l'une quelconque des revendications précédentes, dans lequel des bandes individuelles (10) de tôles lisses ou ondulées sont insérées entre des couches (4, 3) voisines de tôles ondulées ou lisses, afin d'éviter des couches doubles.

12. Corps alvéolaire selon l'une quelconque des revendications précédentes, le corps alvéolaire comportant au moins une couche (3, 4) de tôles dans laquelle est intégré au moins un conducteur électrique (43), qui est électriquement isolé de la couche (3, 4) de tôles, et qui est réalisé sous la forme d'un conducteur chauffant et/ou d'une sonde de mesure.

13. Corps alvéolaire selon la revendication 12, dans lequel la couche (3, 4) de tôles comportant le conducteur électrique (43) est une couche de tôles ondulées constituée de deux bandes (3, 4) de tôles, entre lesquelles est disposé le conducteur électrique (43), de préférence par cylindrage.

14. Corps alvéolaire selon l'une quelconque des revendications 1 à 10, le corps alvéolaire étant constitué d'une bande métallique ondulée (4) et de deux bandes métalliques lisses (3), la bande métallique ondulée (4) étant disposée entre les deux bandes métalliques lisses (3) .

15. Corps alvéolaire selon l'une quelconque des revendications 1 à 10, le corps alvéolaire étant constitué de plusieurs bandes métalliques ondulées (4) et lisses (3), les bandes métalliques ondulées (4) étant disposées entre les bandes métalliques lisses (3).

16. Corps alvéolaire selon l'une quelconque des revendications 1 à 10, dans lequel des tronçons individuels (70) de tôles sont insérés entre chaque couche de la bande métallique ondulée (4).

17. Corps alvéolaire selon l'une quelconque des revendications 1 à 10, le corps alvéolaire étant constitué d'une bande métallique lisse (3) et/ou d'une bande métallique ondulée (4), les bandes métalliques (3, 4) étant découpées dans les points de rebroussement (66) des boucles (21, 22) à partir des deux bords (39) à l'exception d'une étroite partie pleine (65), et les tronçons (61, 61') de bandes étant repliés de 180° dans l'axe longitudinal par rapport aux tronçons (61', 61) des bandes suivantes.

18. Corps alvéolaire selon la revendication 1, dans lequel les couches (3, 4) de tôles sont disposées en un empilement (50) dont les extrémités sont enroulées approximativement en forme de S autour de deux points fixes (51), caractérisé en ce que l'empilement est formé de bandes lisses (3) et/ou de bandes ondulées (4) qui sont superposées en étant pliées en forme de zigzag.

19. Procédé destiné à la fabrication d'un corps alvéolaire métallique constitué de couches (3, 4) de tôles au moins partiellement structurées, notamment selon la revendication 1, comportant les phases suivantes :
a) avec une à dix bandes (3, 4) de tôles qui sont au moins partiellement structurées, de préférence trois à cinq, il est réalisé un cylindre creux, à savoir un anneau circulaire constitué de plusieurs couches de tôles, de préférence trois à dix.
b) Le cylindre creux ou anneau circulaire est déformé de l'extérieur vers l'intérieur au niveau d'au moins trois lignes de sorte que, non seulement dans une zone annulaire extérieure (6), mais aussi dans une zone annulaire intérieure (5), il est obtenu un nombre relativement important de lignes d'inversion (2a, 2b, 2c, ... ou 7, 7b, 7c ; 13a, 13b, 13c, ... ou 14a, 14b, 14c ... ; 15a, 15b, 15c ... ; 16a, 16b, 16c, ... ; 18a, 18b, 18c, ...).
c) La structure semblable à une étoile ou à une rosette en résultant et comportant des boucles, est compactée autour des lignes d'inversion intérieures en enroulant dans le même sens de rotation les boucles s'étendant entre les lignes d'inversion intérieures et les lignes d'inversion extérieures.

20. Procédé selon la revendication 19, selon lequel le cylindre creux est déformé de l'extérieur vers l'intérieur au niveau d'au moins quatre lignes (2a, 2b, 2c, 2d, ...).

21. Procédé selon la revendication 20, selon lequel les lignes (2a, 2b, 2c, 2d, ...) ont différents écartements entre elles dans le sens circonférentiel.

22. Procédé selon l'une des revendications 9, 20 ou 21, selon lequel la déformation (8) vers l'intérieur n'est effectuée que jusqu'à la limite d'une zone centrale intérieure (17) creuse.

23. Procédé selon l'une des revendications 19, 20, 21 ou 22, selon lequel au moins l'une des deux bandes de tôles est constituée de couches (3, 4) de tôles étroitement accolées les unes contre les autres, entre lesquelles est intégré au moins un conducteur électrique (43) qui est électriquement isolé (45).

24. Procédé selon l'une des revendications 19, 20, 21, 22 ou 23, selon lequel, lors de l'enroulement du cylindre creux, une bande métallique lisse (3), une bande métallique ondulée (4), et à nouveau une bande métallique lisse (3) sont amenées simultanément.

25. Procédé selon l'une quelconque des revendications 19 à 24, selon lequel pour des corps alvéolaires dont les formes de section transversale s'écartent de la forme circulaire, des secteurs (20) d'anneaux circulaires sont enfoncés vers une zone centrale (11), la zone centrale (11, 12) ayant une forme sensiblement linéaire.

26. Procédé selon l'une quelconque des revendications 19 à 25, selon lequel, pour des corps alvéolaires ayant des formes particulières de section transversale, les longueurs des boucles (22) sont inégales et adaptées à la forme de la section transversale du corps alvéolaire.
